# EUROPEAN PATENT APPLICATION

(11) **EP 3 059 106 A1**
(43) Date of publication of application: **24.08.2016**
(21) Application number: 16154956.3
(22) Date of filing: 10.02.2016
(51) Int. Cl.: B60J 5/04

(54) **VEHICLE DOOR STRUCTURE**

(30) Priority: 18.02.2015 JP 2015029593
(71) Applicant: Toyota Jidosha Kabushiki Kaisha, Toyota-shi, Aichi-ken 471-8571 (JP)
(72) Inventor: KAMINAGA, Takumi, TOYOTA-SHI, AICHI-KEN, 471-8571 (JP); YOSHIDA, Minoru, TOYOTA-SHI, AICHI-KEN, 471-8571 (JP)
(74) Representative: Intès, Didier Gérard André

(57) **Abstract**

A vehicle door structure including: a frame inner (20) with an inner wall portion (22) at a door thickness direction inside of a door frame (14) and an upper wall portion (24) at a door up-down direction upper side of the door frame (14); and a frame outer (30) with an outer wall portion (32) at the door thickness direction outside of the door frame (14) and a lower wall portion (34) at the door up-down direction lower side of the door frame (14), wherein a door up-down direction upper side end portion (32A) of the outer wall portion (32) is welded to a door thickness direction outside end portion (24A) of the upper wall portion (24), and a door thickness direction inside end portion (34A) of the lower wall portion (34) is welded to a door up-down direction lower side end portion (22A) of the inner wall portion (22) to obtain a closed cross-section profile.

## Description

### Technical Field

The present invention relates to a vehicle door structure.

### Related Art

Conventional vehicle door structures are known in which a door sash (door frame) is formed bent into a substantially rectangular shape in cross-section orthogonal to the length direction, thus improving the rigidity of the door sash (see, for example, Japanese Patent Application Laid-Open (JP-A) No. 2012-101563).

However, when the door is manufactured by forming the door frame bent into a substantially rectangular shape in cross-section orthogonal to the length direction, there is a concern that the manufacturing process of this door becomes complicated.

### SUMMARY

An object of the present invention is to provide a vehicle door structure which allows for an increase of the productivity for manufacturing a door, while securing the rigidity of a door frame.

In order to realize the above object, a vehicle door structure of a first aspect of the present invention includes: a frame inner that is formed in an "L" shape in cross-section orthogonal to a length direction and that configures an inner wall portion at a door thickness direction inside of a door frame and an upper wall portion at a door up-down direction upper side of the door frame; and a frame outer that is formed in an "L" shape in cross-section orthogonal to the length direction, that configures an outer wall portion at the door thickness direction outside of the door frame and a lower wall portion at the door up-down direction lower side of the door frame, wherein a door up-down direction upper side end portion of the outer wall portion is welded to a door thickness direction outside end portion of the upper wall portion, and a door thickness direction inside end portion of the lower wall portion is welded to a door up-down direction lower side end portion of the inner wall portion, so as to configure a closed cross-section profile together with the frame inner.

In the first aspect of the present invention, the frame inner formed in an "L" shape in cross-section orthogonal to the length direction and the frame outer formed in an "L" shape in cross-section orthogonal to the length direction are welded together, thereby forming the door frame with a closed cross-section profile. Productivity of manufacturing the door is thereby increased while securing the rigidity of the door frame, compared to a configuration in which a door frame is formed by being bent into a rectangular shape in cross-section orthogonal to the length direction to form a closed cross-section profile. Note that the "L" shape of the present invention also includes substantially "L" shapes.

A vehicle door structure of a second aspect of the present invention is the vehicle door structure of the first aspect, wherein the door up-down direction upper side end portion of the outer wall portion is in face-to-face contact with the door thickness direction outside end portion of the upper wall portion, and the door thickness direction inside end portion of the lower wall portion is in face-to-face contact with the door up-down direction lower side end portion of the inner wall portion.

In the second aspect of the present invention, the end portions of the frame inner and the end portions of the frame outer are respectively welded together in face-to-face contact. Positional misalignment when the end portions of the frame inner and the end portions of the frame outer are welded together is thereby suppressed, and the assembly accuracy is improved.

A vehicle door structure of a third aspect of the present invention is the vehicle door structure of the first aspect or the second aspect, wherein a weld location of the door up-down direction upper side end portion of the outer wall portion welded to the door thickness direction outside end portion of the upper wall portion, and a weld location of the door thickness direction inside end portion of the lower wall portion welded to the door up-down direction lower side end portion of the inner wall portion, are both locations that are furthest away from the centroid of the closed cross-section profile.

In the third aspect of the present invention, the end portions of the frame inner and the end portions of the frame outer are respectively welded together at locations that are furthest away from the centroid of the closed cross-section profile. This enables the rigidity of the door frame to be improved compared to a configuration in which the end portions of the frame inner and the end portions of the frame outer are not welded together at locations that are furthest away from the centroid of the closed cross-section profile.

A vehicle door structure of a fourth aspect of the present invention is the vehicle door structure of any one of the first aspect to the third aspect, wherein the door thickness direction outside end portion of the upper wall portion projects out further toward the door thickness direction outside than the door up-down direction upper side end portion of the outer wall portion, and the door up-down direction lower side end portion of the inner wall portion projects out further toward the door up-down direction lower side than the door thickness direction inside end portion of the lower wall portion.

In the fourth aspect of the present invention, the end portions of the frame inner are formed longer than the end portions of the frame outer (the end portions of the frame outer are formed shorter than the end portions of the frame inner). The end portions of the frame inner and the end portions of the frame outer are thereby easily joined together by laser welding with filler wire.

A vehicle door structure of a fifth aspect of the present invention is the vehicle door structure of any one of the first aspect to the fourth aspect, wherein a frame garnish is disposed in close proximity to the door up-down direction lower side end portion of the inner wall portion and to a bent portion of the frame outer.

In the fifth aspect of the present invention, the frame garnish is disposed in close proximity to the door up-down direction lower side end portion of the inner wall portion and to the bent portion of the frame outer. This enables the visibility from a vehicle cabin side to be improved by widening.

A vehicle door structure of a sixth aspect of the present invention is the vehicle door structure of any one of the first aspect to the fifth aspect, wherein the frame inner and the frame outer are each made of an aluminum alloy.

In the sixth aspect of the present invention, the frame inner and the frame outer are each made of an aluminum alloy. Note that the manufacturing process of an aluminum alloy door frame formed by being bent becomes complicated; however, the manufacturing process of the door frame formed by welding together the frame inner and the frame outer does not become complicated. Productivity of manufacturing the door made of an aluminum alloy is thereby increased.

The first aspect of the present invention enables productivity of manufacturing the door to be increased, while securing the rigidity of the door frame.

The second aspect of the present invention enables positional misalignment when respectively welding together the end portions of the frame inner and the end portions of the frame outer to be suppressed, enabling the assembly accuracy to be improved.

The third aspect of the present invention enables the rigidity of the door frame to be improved.

The fourth aspect of the present invention enables the end portions of the frame inner and the end portions of the frame outer to be easily joined together by laser welding with filler wire.

The fifth aspect of the present invention enables the visibility from the vehicle cabin side to be improved by widening.

The sixth aspect of the present invention enables the productivity of manufacturing the door made of an aluminum alloy to be increased.

### BRIEF DESCRIPTION OF DRAWINGS

Exemplary embodiments of the present invention will be described in detail based on the following figures, wherein:
Fig. 1 is a side view illustrating a door including a vehicle door structure according to an exemplary embodiment;
Fig. 2 is a cross-section along arrow line X-X in Fig. 1; and
Fig. 3 is a cross-section illustrating a vehicle door structure according to a comparative example superimposed on a vehicle door structure according to the present exemplary embodiment.

### DETAILED DESCRIPTION

Detailed explanation follows regarding an exemplary embodiment of the present invention, based on the drawings. Note that for ease of explanation, in each of the drawings, the arrow UP indicates the door upper direction, the arrow FR indicates the door front direction, and the arrow OUT indicates the door thickness direction outside as appropriate. In the below explanation, unless specifically stated otherwise, reference to the up-down, front-rear, and inside-outside directions indicates up-down in the door up-down direction, front-rear in the door front-rear direction, and inside-outside in the door thickness direction.

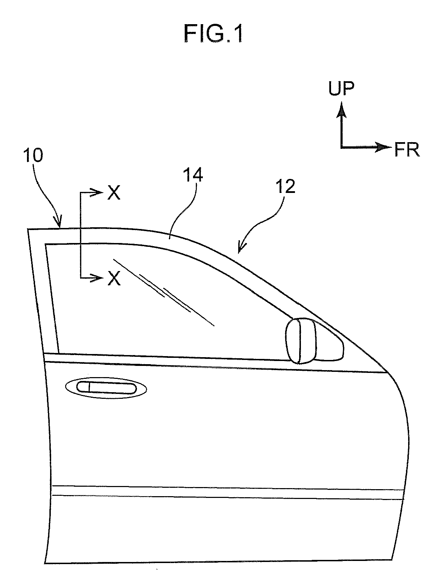

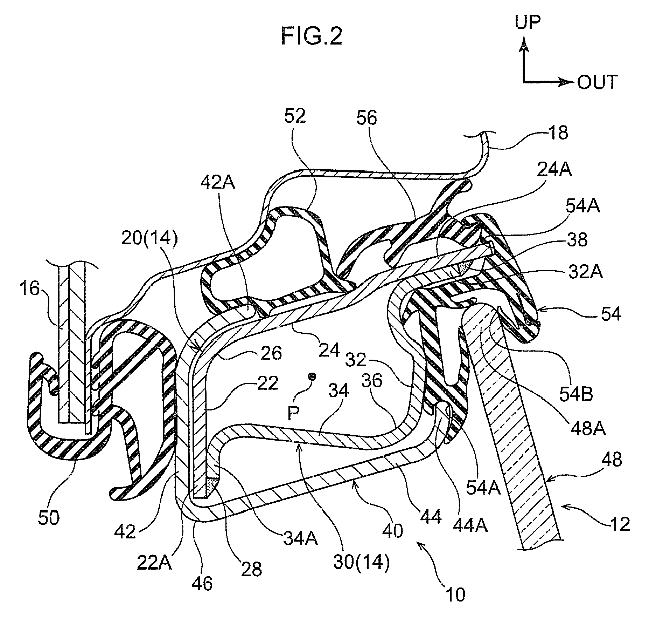

As illustrated in Fig. 1, a door frame 14 (door sash) configuring a window frame is provided at an upper portion side of a door 12 including a vehicle door structure 10 according to the present exemplary embodiment. As illustrated in Fig. 2, the door frame 14 is configured with a closed cross-section profile by joining together an aluminum alloy frame inner 20 formed in a substantially "L" shape in cross-section orthogonal to the length direction, and an aluminum alloy frame outer 30 formed in a substantially "L" shape in cross-section orthogonal to the length direction.

To explain in detail, the frame inner 20 includes an inner wall portion 22 that configures the door thickness direction inside of the door frame 14, and an upper wall portion 24 that configures the door up-down direction upper side of the door frame 14. A boundary portion between the inner wall portion 22 and the upper wall portion 24 forms a bent portion 26 that is bent in an obtuse angle in cross-section view orthogonal to the length direction.

The frame outer 30 includes an outer wall portion 32 that configures the door thickness direction outside of the door frame 14, and a lower wall portion 34 that configures the door up-down direction lower side of the door frame 14. A boundary portion between the outer wall portion 32 and the lower wall portion 34 forms a bent portion 36 that is bent in substantially a right angle in cross-section view orthogonal to the length direction. Note that the outer wall portion 32 is bent in a substantially "S" shape in the cross-section view illustrated in Fig. 2.

An upper flange portion 32A serving as a door up-down direction upper side end portion of the outer wall portion 32 is in face-to-face contact with, and joined by laser welding with filler wire to, an outer flange portion 24A serving as a door thickness direction outside end portion of the upper wall portion 24. An inner flange portion 34A serving as a door thickness direction inside end portion of the lower wall portion 34 is in face-to-face contact with, and joined by laser welding with filler wire to, a lower flange portion 22A serving as a door up-down direction lower side end portion of the inner wall portion 22. The door frame 14 is thereby formed with a substantially rectangular shaped closed cross-section profile.

The outer flange portion 24A of the upper wall portion 24 projects out further toward the door thickness direction outside than the upper flange portion 32A of the outer wall portion 32. The lower flange portion 22A of the inner wall portion 22 projects out further toward the door up-down direction lower side than the inner flange portion 34A of the lower wall portion 34. The configuration thereby enables laser welding with filler wire to be performed. Note that laser welding with filler wire is a method of laser welding performed while supplying a filler wire serving as a weld material from the exterior.

A weld location 38 of the upper flange portion 32A of the outer wall portion 32 to the outer flange portion 24A of the upper wall portion 24 by laser welding with filler wire is a location that is furthest away from the centroid P of the closed cross-section profile. Similarly, a weld location 28 of the inner flange portion 34A of the lower wall portion 34 to the lower flange portion 22A of the inner wall portion 22 by laser welding with filler wire is a location that is furthest away from the centroid P of the closed cross-section profile.

Namely, locations that are furthest away from the centroid P of the closed cross-section profile configure the weld locations 28, 38. Note that the shape of the frame outer 30 is determined from the perspectives of improving the rigidity of the door frame 14, and improving visibility, described later. A frame garnish 40 is provided to the inner wall portion 22 and the lower wall portion 34 that face a vehicle cabin side of the door frame 14, so as to cover at least the inner wall portion 22 and the lower wall portion 34.

The frame garnish 40 includes an inner wall portion 42 that is disposed alongside the inner wall portion 22 of the frame inner 20, and that covers the inner wall portion 22 as far as and including the bent portion 26, and a flat plate shaped lower wall portion 44 that is disposed in close proximity to a leading end face of the lower flange portion 22A of the inner wall portion 22 of the frame inner 20, and an outer face of the bent portion 36 of the frame outer 30. A boundary portion between the inner wall portion 42 and the lower wall portion 44 configures a bent portion 46 that is bent in an acute angle in cross-section view orthogonal to the length direction.

A first weather strip 52, serving as a main weather strip, is provided at an inside upper face of the upper wall portion 24 of the frame inner 20. A door thickness direction inside end portion of the first weather strip 52 covers a door thickness direction outside end portion 42A of the inner wall portion 42 of the frame garnish 40 from above.

A second weather strip 54 is provided at an outer face side of the outer wall portion 32 of the frame outer 30 by fitting respective groove portions 54A together with a door thickness direction outside end portion 44A of the lower wall portion 44 of the frame garnish 40, and the outer flange portion 24A of the upper wall portion 24 of the frame inner 20.

The first weather strip 52 and the second weather strip 54 are contiguously joined together by a third weather strip 56 provided at an outside upper face of the upper wall portion 24. Note that, when side window glass 48 is closed, an upper end portion 48A thereof is inserted inside an insertion portion 54B formed to the second weather strip 54.

An opening weather strip 50 is provided by being fitted together with a panel 16 that configures the vehicle cabin. Thus, when the door 12 is closed, the inner wall portion 42 of the frame garnish 40 abuts the opening weather strip 50 with a specific pressure. When the door 12 is closed, the first weather strip 52 and the third weather strip 56 abut a panel 18 configuring the roof of the vehicle with a specific pressure.

Explanation follows regarding operation of the vehicle door structure 10 according to the present exemplary embodiment configured as described above.

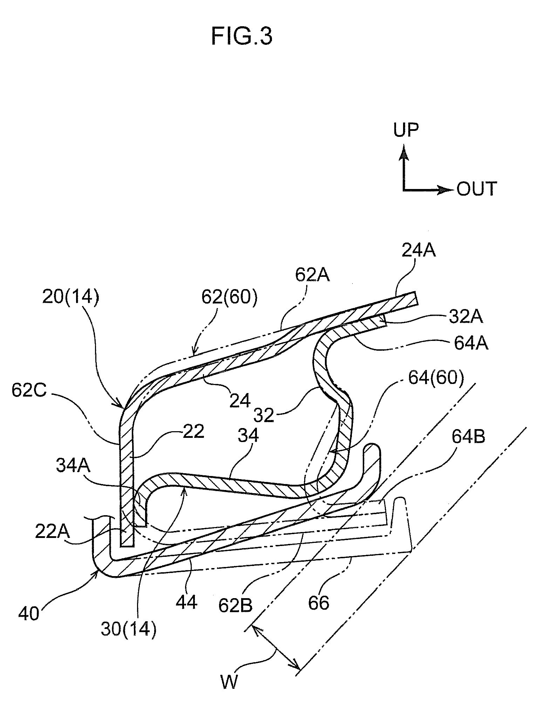

First, explanation follows regarding a door frame 60 according to a comparative example, illustrated by the hypothetical lines in Fig. 3. The door frame 60 is configured by a frame inner 62 formed by being bent into a substantially "C" shape in cross-section orthogonal to the length direction, and a frame outer 64 that closes off an open side of the frame inner 62. Namely, the door frame 60 is formed with a substantially rectangular shaped closed cross-section profile by respectively welding an upper flange portion 64A and a lower flange portion 64B of the frame outer 64 to an upper wall portion 62A and a lower wall portion 62B of the frame inner 62.

In contrast thereto, the door frame 14 according to the present exemplary embodiment is formed with a substantially rectangular shaped closed cross-section profile by respectively welding the lower flange portion 22A and the outer flange portion 24A of the frame inner 20 formed in a substantially "L" shape in cross-section orthogonal to the length direction, to the inner flange portion 34A and the upper flange portion 32A of the frame outer 30 formed in a substantially "L" shape in cross-section orthogonal to the length direction. Thus the door frame 14 according to the present exemplary embodiment has higher rigidity than the door frame 60 according to the comparative example.

Moreover, when the door frame 60 according to the comparative example is made of an aluminum alloy, and the frame inner 62 is formed bent into a substantially "C" shape in cross-section orthogonal to the length direction, a bending process performed by a roller or the like, not illustrated in the drawings, is required, such that the manufacturing process becomes complicated.

In contrast thereto, the frame inner 20 and the frame outer 30 that configure the door frame 14 according to the present exemplary embodiment and each have a substantially "L" shaped cross-section can be easily manufactured by press forming, such that the above-described bending process using a roller or the like is not required. Namely, in the case of the door frame 14 according to the present exemplary embodiment, the manufacturing process is not complicated, even when made of an aluminum alloy.

The door frame 14 according to the present exemplary embodiment accordingly enables the productivity of manufacturing a door 12 made of an aluminum alloy to be increased, compared to the door frame 60 according to the comparative example. Namely, the vehicle door structure 10 according to the present exemplary embodiment can be particularly effectively applied in cases in which the door 12 is made of an aluminum alloy.

In the configuration of the door frame 60 according to the comparative example, there is a concern that weld positions of the frame outer 64 to the frame inner 62 may be misaligned in the door thickness direction. However, in the door frame 14 according to the present exemplary embodiment, the inner flange portion 34A and the upper flange portion 32A of the frame outer 30 are respectively welded in face-to-face contact with the lower flange portion 22A and the outer flange portion 24A of the frame inner 20, such that the weld positions are unambiguously determined, and there is no concern of misalignment.

Namely, in the case of the door frame 14 according to the present exemplary embodiment, position misalignment of the weld positions can be prevented or suppressed when respectively welding together the lower flange portion 22A and the outer flange portion 24A of the frame inner 20, and the inner flange portion 34A and the upper flange portion 32A of the frame outer 30, enabling the assembly (weld position) accuracy to be improved.

In the door frame 14 according to the present exemplary embodiment, the lower flange portion 22A of the frame inner 20 and the inner flange portion 34A of the frame outer 30 are welded together at the weld location 28 that is furthest away from the centroid P of the closed cross-section profile. Furthermore, the outer flange portion 24A of the frame inner 20 and the upper flange portion 32A of the frame outer 30 are welded together at the weld location 38 that is furthest away from the centroid P of the closed cross-section profile.

Namely, the lower flange portion 22A and the outer flange portion 24A of the frame inner 20, and the inner flange portion 34A and the upper flange portion 32A of the frame outer 30, are respectively welded together at the weld locations 28, 38 that are furthest away from the centroid P of the closed cross-section profile. This enables the rigidity of the door frame 14 to be improved, compared to configurations in which welding is not performed at locations that are furthest away from the centroid P of the closed cross-section profile.

In the door frame 14 according to the present exemplary embodiment, the outer flange portion 24A of the upper wall portion 24 of the frame inner 20 projects out further toward the door thickness direction outside than the upper flange portion 32A of the outer wall portion 32 of the frame outer 30, and the lower flange portion 22A of the inner wall portion 22 of the frame inner 20 projects out further toward the door up-down direction lower side than the inner flange portion 34A of the lower wall portion 34 of the frame outer 30.

In other words, the lower flange portion 22A and the outer flange portion 24A of the frame inner 20 are formed longer than the inner flange portion 34A and the upper flange portion 32A of the frame outer 30 (the inner flange portion 34A and the upper flange portion 32A of the frame outer 30 are formed shorter than the lower flange portion 22A and the outer flange portion 24A of the frame inner 20).

This enables the inner flange portion 34A and the upper flange portion 32A of the frame outer 30 to be easily respectively joined by laser welding with filler wire to the lower flange portion 22A and the outer flange portion 24A of the frame inner 20.

In the door frame 14 according to the present exemplary embodiment, the lower wall portion 44 of the frame garnish 40 is disposed in close proximity to the lower flange portion 22A of the inner wall portion 22 of the frame inner 20, and to the bent portion 36 of the frame outer 30. Namely, in cross-section view orthogonal to the length direction, the lower wall portion 44 is disposed bent in an acute angle with respect to the inner wall portion 42 of the frame garnish 40 disposed alongside the inner wall portion 22 of the frame inner 20.

As illustrated in Fig. 3, in the frame inner 62 of the door frame 60 according to the comparative example, an angle formed by an inner wall portion 62C and the lower wall portion 62B configures substantially a right angle in cross-section view orthogonal to the length direction. The closed cross-section profile of the door frame 60 according to the comparative example is thereby larger than the closed cross-section profile of the door frame 14 according to the present exemplary embodiment.

In other words, when the cross-section of the inner wall portion 62C and the upper wall portion 62A of the frame inner 62 is illustrated superimposed on the cross-section of the inner wall portion 22 and the upper wall portion 24 of the frame inner 20, the lower wall portion 62B of the frame inner 62 juts out further toward the door up-down direction lower side than the lower wall portion 34 of the frame outer 30.

A frame garnish 66 of the door frame 60 according to the comparative example is thereby disposed further toward the door up-down direction lower side than the lower wall portion 62B of the frame inner 62, and blocks visibility from the vehicle cabin side more than the frame garnish 40 according to the present exemplary embodiment. Namely, the door frame 14 according to the present exemplary embodiment enables the visibility from the vehicle cabin side to be widened by at least the amount of a width W compared to the door frame 60 according to the comparative example, and enables impairment to visibility from the vehicle cabin side to be ameliorated.

The vehicle door structure 10 according to the present exemplary embodiment has been explained above based on the drawings; however, the vehicle door structure 10 according to the present exemplary embodiment is not limited to that illustrated, and suitable design modifications may be implemented within a range not departing from the spirit of the present invention. For example, the door frame 14 according to the present exemplary embodiment is not limited to being made of an aluminum alloy, and may be made of steel or resin. When made of resin, the frame inner 20 and the frame outer 30 may be joined together by adhesive.

The door frame 14 according to the present exemplary embodiment is not limited to a configuration that is joined together by laser welding with filler wire, and may be a configuration that is joined together by normal laser welding, spot welding, or the like. There is accordingly no limitation to a configuration in which the lower flange portion 22A and the outer flange portion 24A of the frame inner 20 are formed longer than the inner flange portion 34A and the upper flange portion 32A of the frame outer 30.

## Claims

1. A vehicle door structure (10) comprising:
a frame inner (20) that is formed in an L shape in a cross-section orthogonal to a length direction and that configures an inner wall portion (22) at a door thickness direction inside of a door frame (14) and an upper wall portion (24) at a door up-down direction upper side of the door frame (14); and
a frame outer (30) that is formed in an L shape in a cross-section orthogonal to the length direction, that configures an outer wall portion (32) at the door thickness direction outside of the door frame (14) and a lower wall portion (34) at the door up-down direction lower side of the door frame (14),
wherein a door up-down direction upper side end portion (32A) of the outer wall portion (32) is welded to a door thickness direction outside end portion (24A) of the upper wall portion (24), and a door thickness direction inside end portion (34A) of the lower wall portion (34) is welded to a door up-down direction lower side end portion (22A) of the inner wall portion (22), so as to configure a closed cross-section profile together with the frame inner (20).

2. The vehicle door structure of claim 1, wherein:
the door up-down direction upper side end portion (32A) of the outer wall portion (32) is in face-to-face contact with the door thickness direction outside end portion (24A) of the upper wall portion (24); and
the door thickness direction inside end portion (34A) of the lower wall portion (34) is in face-to-face contact with the door up-down direction lower side end portion (22A) of the inner wall portion (22).

3. The vehicle door structure of claim 1 or claim 2, wherein:
a weld location of the door up-down direction upper side end portion (32A) of the outer wall portion (32) welded to the door thickness direction outside end portion (24A) of the upper wall portion (24), and a weld location of the door thickness direction inside end portion (34A) of the lower wall portion (34) welded to the door up-down direction lower side end portion (22A) of the inner wall portion (22), are both locations that are furthest away from a centroid of the closed cross-section profile.

4. The vehicle door structure of any one of claim 1 to claim 3, wherein:
the door thickness direction outside end portion (24A) of the upper wall portion (24) projects out further toward the door thickness direction outside than the door up-down direction upper side end portion (32A) of the outer wall portion (32); and
the door up-down direction lower side end portion (22A) of the inner wall portion (22) projects out further toward the door up-down direction lower side than the door thickness direction inside end portion (34A) of the lower wall portion (34).

5. The vehicle door structure of any one of claim 1 to claim 4, wherein
a frame garnish (40) is disposed in close proximity to the door up-down direction lower side end portion (22A) of the inner wall portion (22) and to a bent portion (36) of the frame outer (30).

6. The vehicle door structure of any one of claim 1 to claim 5, wherein
the frame inner (20) and the frame outer (30) are each made of an aluminum alloy.
